# EUROPÄISCHE PATENTSCHRIFT

(11) **EP 0 634 967 B1**
(45) Veröffentlichungstag und Bekanntmachung des Hinweises auf die Patenterteilung: **10.03.1999**
(21) Anmeldenummer: 94905042.1
(22) Anmeldetag: 12.01.1994
(51) Int. Cl.: B29B 13/06, B29C 49/62, B29C 35/00, F26B 17/14

(54) **VERFAHREN ZUM BETRIEB EINES TROCKNERS FÜR PULVER-, GRANULATFÖRMIGE UND SCHÜTTFÄHIGE STOFFE UND EIN NACH DEM VERFAHREN ARBEITENDER TROCKNER**
PROCESS FOR OPERATING A DRIER FOR POWDERED, GRANULATED AND POURABLE MATERIALS AND A DRIER OPERATING ACCORDING TO SAID PROCESS
PROCEDE DE FONCTIONNEMENT D'UN SECHEUR POUR SUBSTANCES COULANTES SE PRESENTANT SOUS FORME DE POUDRES OU DE GRANULES ET SECHEUR FONCTIONNANT SELON LEDIT PROCEDE

(30) Priorität: 13.01.1993 DE 4300595
(43) Veröffentlichungstag der Anmeldung: 25.01.1995
(73) Patentinhaber: FASTI FARRAG & STIPSITS GMBH, A-6900 Bregenz (AT)
(72) Erfinder: FARRAG, El-Taher, A-Höchst (AT)
(74) Vertreter: Riebling, Peter, Dr.-Ing.
(86) Internationale Anmeldenummer: EP9400076
(87) Internationale Veröffentlichungsnummer: WO9415764

(56) Entgegenhaltungen:
- EP-A- 0 122 886
- GB-A- 2 232 632
- US-A- 4 636 084
- DATABASE WPI Section Ch, Week 9217, Derwent Publications Ltd., London, GB; Class AB, AN 92-137963 C17! & JP,A,4 080 005 (NAKAGOME M.) 13. März 1992 & PATENT ABSTRACTS OF JAPAN vol. 16, no. 293 (M-1273)29. Juni 1992 & JP,A,04 080 005 (NAKAGOME MATSUJI) 13. März 1992
- PATENT ABSTRACTS OF JAPAN vol. 9, no. 183 (M-400)30. Juli 1985 & JP,A,60 049 918 (AIDA ENGINEERING K.K.) 19. März 1985
- KUNSTSTOFFE Bd. 73, Nr. 4 , April 1983 , MUNCHEN DE Seite 189 ENGELMANN & BUCKHAM ANCILLERIES LTD. 'ABWÄRMENUTZUNG ZUR MATERIALTROCKNUNG'

## Beschreibung

Gegenstand der Erfindung ist ein Verfahren und ein nach dem Verfahren arbeitender Trockner nach dem Oberbegriff des Patentanspruches 1.

Derartige Trockner werden z. B. als bevorzugter Anwendungsfall in der Kunststoffindustrie verwendet, um Granulate zu trocknen, wie sie zur Herstellung von Kunststoffkörpern im Hohlblasverfahren benötigt werden. Es ist hierbei bekannt, in einen trichterförmigen Trockner das zu trocknende Granulat einzufüllen und in den Bodenbereich des Trockners einen Trockenluftstrom zu leiten, der nachfolgend nach oben steigt, das zu trocknende Granulat entfeuchtet, wobei die trockene Luft dann an der Oberseite des Trockners durch eine Auslaßöffnung entweicht.

Der bekannte Trockner wird im Umluftbetrieb betrieben, d.h. stromaufwärts eines Gebläses wird ein trockener Preßluftstrom in die dortige Leitung eingeführt, dieser Preßluftstrom entspannt sich im Gebläse und wird durch dieses Gebläse stromabwärts über eine oder mehrere Austrittsdüsen in den Bodenbereich des Trockners geleitet.

Nachteil des bekannten Verfahrens und des danach arbeitenden Trockners ist, daß ein kontinuierlicher Preßluftstrom bereitgestellt werden muß, was mit hohem Maschinenaufwand verbunden ist. Dieser Preßluftstrom muß gefiltert, entölt und entsprechend beheizt werden, um eine günstige Konditionierung der Trockenluft zu erreichen.

Weiterer Nachteil ist der relativ hohe Maschinenaufwand, der notwendig ist, um die Trockenluft im Umluftbetrieb in dem Trockner umzuwälzen. Es sind hierfür entsprechende Leitungen notwendig und ein geeignetes Gebläse, um einen ständigen Durchsatz im Kreislauf durch den Trockner zu gewährleisten.

Weiterer Nachteil ist, daß man den Preßluftstrom, der stromaufwärts des Gebläses eingeführt wird, nicht von dem Trockenluftstrom getrennt führen kann und konditionieren kann.

Damit besteht der Nachteil, daß man keinen gesonderten Luftstrom in den Trockner zuführen kann, was bei manchen Trocknungsaufgaben vorteilhaft ist.

Aus der US-A-4636084 ist es bekannt, Kunststoff unter erhöhter Temperatur in eine Formeinrichtung einzubringen. Nach dem Einbringen wird dem in der Form befindlichen Kunststoff ein Teil dieser Wärme entzogen und zum Trocknen des noch zuzuführenden Kunststoffes verwendet. Es handelt sich hierbei also um einen internen Wärmekreislauf in der Kunststofformmaschine.

Der Erfindung liegt deshalb die Aufgabe zugrunde, ein Verfahren und einen nach dem Verfahren arbeitenden Trockner so weiterzubilden, daß mit geringerem Maschinenaufwand eine verbesserte Trocknung des Trocknungsgutes gewährleistet ist.

Zur Lösung der gestellten Aufgabe ist die Erfindung durch das Verfahren nach dem Gegenstand des Anspruches 1 und die Vorrichtung nach dem Gegenstand des Anspruches 7 gekennzeichnet.

Wesentliches Merkmal des Verfahrens ist, daß das erfindungsgemäße Verfahren mit einem Trocknungsluftstrom arbeitet, der am Ausgang (stromabwärts) eines Hohlblasverfahrens gewonnen wird, was mit dem Vorteil verbunden ist, daß dieser Trocknungsluftstrom auf einen relativ niedrigen Taupunkt herab getrocknet ist, daß er bereits schon fertig konditioniert (gefiltert und entölt) ist und daß dieser Trocknungsluftstrom, der ansonsten nutzlos ins Freie entweichen würde, nun in den Granulattrockner eingespeist wird.

Unter dem Begriff Trocknungsluft wird der Luftstrom, gemeint, der als Trocknungsluft dann in den Granulattrockner eingeführt wird. Auf den Hohlblasprozeß bezogen ist diese Trocknungsluft aber als Spülluft zu bezeichnen, denn es wird erfindungsgemäß die Spülluft aus dem Hohlblasverfahren zur Einleitung in den Granulattrockner verwendet.

Damit werden mehrere Vorteile gleichzeitig erreicht. Es wird ein ansonsten nutzlos ins Freie abgeleiteter Spülluftstrom als Trockenluftstrom für den Granulattrockner verwendet, so daß ein eigener Preßluftstrom, wie er im Stand der Technik bekannt ist, nicht bereitgestellt werden muß. Damit entsteht nur ein geringer Maschinenaufwand, denn es muß nur eine entsprechende Leitungsverbindung vom Ausgang des Hohlblasprozeßes zu dem erfindungsgemäßen Granulattrockner hergestellt werden.

Erfindungsgemäß wird also die Spülluft, die beim Blasverfahren anfällt, als Trockenmittel in einem Granulattrockner verwendet, um derartige Granulate zu trocknen.

Der Begriff "Granulat" ist nicht einschränkend zu verstehen denn nach der Erfindung fallen hierunter sämtliche Stoffe, die in an sich bekannter Weise in einem derartigen Trockner zu trocknen sind, d.h. pulverförmige, granulatförmige oder faserförmige Stoffe.

Ein weiterer Vorteil des erfindungsgemäßen Verfahrens liegt darin, daß man nun nach dem Austritt der Spülluft aus dem Hohlblasprozeß diese Trocknungsluft vorheizen kann, um eine derartig beheizte Trocknungsluft in den Granulattrockner einzuführen. Dies war beim Stand der Technik nicht möglich, weil beim Stand der Technik lediglich Preßluft stromaufwärts eines Umluftgebläses eingeblasen wurde und es nicht vorgesehen war, daß diese Luft auch zusätzlich geheizt wird. Die im Kreislauf geführte Luft wurde beim Stand der Technik geheizt, während bei dem Verfahren nach der Erfindung die Spülluft des Hohlblasprozesses in den Granulattrockner eingeführt wird, das Trocknungsgut durchströmt und an einer am oberen Ende des Trockners angeordneten Austrittsöffnung den Trockner verläßt.

In einer ersten Ausgestaltung der vorliegenden Erfindung wird also auf einen Kreislaufprozeß verzichtet und es wird ein einfaches Durchlaufverfahren für den Trockner vorgeschlagen.

In einer Weiterbildung der vorliegenden Erfindung ist es vorgesehen, daß neben der Einbringung von Trocknungsluft nach dem oben genannten Verfahren noch ein zusätzlicher Kreislauf für die Führung von zusätzlicher Trocknungsluft im Trockner vorgeschlagen wird.

Bei dem erstgenannten bevorzugten Ausführungsbeispiel wird also die Trocknungsluft in einem Durchlaufverfahren durch den Trockner hindurchgeführt, was mit dem wesentlichen Vorteil eines geringen Maschinenaufwandes verbunden ist.

Erst in dem zweit beschriebenen Ausführungsbeispiel wird noch ein zusätzlicher Trocknungskreislauf vorgeschlagen, wobei am oberen Ende des Trockners über eine entsprechende Leitung ein Gebläse ansetzt, welches die aus dem Trockner entnommene Luft verdichtet und wieder in den Bodenbereich des Trockners zurückführt. Diese in den Bodenbereich zurückgeführte Luft wird dann zusätzlich aufgeheizt, was mit dem Vorteil verbunden ist, daß die gesamte Granulatmasse durch diese Beheizung schnell auf eine erforderliche Temperatur hochgefahren werden kann.

Wichtig ist im übrigen, daß der Trocknungsprozeß unmittelbar mit dem Hohlblasprozeß zusammenhängt, und zwar in der Weise, daß man vor Beginn des Hohlblasprozeßes zunächst das Granulat trocknen muß, um trockenes Granulat für den Hohlblasprozeß zur Verfügung zu haben. Dies erfordert, daß man zunächst einen Preßluftstrom direkt in den Trockner einleitet und das Granulat vortrocknet. Sobald ein Teil des Granulates getrocknet ist, kann dieses in den Extruder gefördert werden, der das Material in einen Schlauchverformungskopf leitet, wo das Material in einen Kunststoffschlauch verformt wird, welcher nachfolgend dann in die Hohlblasform eingegeben wird. Danach erst wird der Hohlblasprozeß selbst gestartet und die beim Hohlblasprozeß sich ergebende Spülluft wird dann verwendet, um den Trockner weiter im Trockungsbetrieb nach dem erfindungsgemäßen Verfahren zu betreiben.

Die vorliegende Erfindung bezieht sich also auch darauf, daß man die Preßluft, die man für den Hohlblasprozeß verwendet, auch unmittelbar in den Trockner einleiten kann, um zumindest zu Beginn des Trockungsprozesses eine Teiltrocknung des Granulates zu bewerkstelligen.

Die Erfindung ist nicht auf die Verwendung von Spülluft aus einem Extrusionsblasverfahren, wie oben stehend beschrieben, beschränkt, sondern sie bezieht sich auf die Verwendung von Spülluft aus beliebigen KunststoffUmformungsverfahren, insbesondere auch auf das sogenannte Streckblasverfahren oder auf andere bekannte Kunststoff-Umformungsverfahren.

Wichtig bei der vorliegenden Erfindung ist also in erster Linie, daß das Abfallprodukt des Kunststoff-Umformverfahrens, nämlich die zur Kunststoffumformung verwendete Spül- oder Blasluft als Trocknungsluft für einen Granulattróckner verwendet wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beanspruch
soweit sie einzeln oder in Kombination gegenüber dem Stand der Technik neu sind.

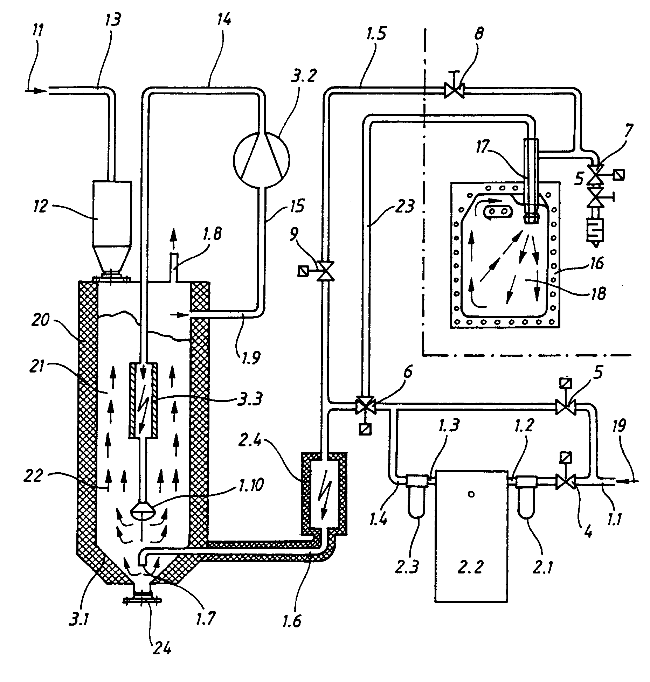

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

In der Abbildung ist schematisiert ein bevorzugtes Ausführungsbeispiel des erfindungsgemäßen Verfahrens und eines danach arbeitenden Granulattrockners gezeigt.

Am Eingang eines Leitungsnetzes wird in Pfeilrichtung 19 Druckluft l.l in die dortige Leitung eingespeist, wobei das Ventil 5 geschlossen ist und das Ventil 4 geöffnet sei. Diese Druckluft l.l durchläuft einen Vorfilter 2.1 und gelangt über die Leitung 1.2 in einen Trockner 2.2.

Die Druckluft l.l weist einen Druck etwa im Bereich zwischen 5 - 12 bar auf.

Wird hingegen die Druckluft 1.1 für ein Streckblasverfahren benötigt, dann liegt der Druckbereich im Bereich zwischen 25 - 40 bar.

Am Ausgang des Trockners 2.2 strömt die Luft über die Leitung 1.3 durch einen Filter 2.3 für den Fall, daß=der z. B. als Absorptionstrockner ausgebildete Trockner 2.2 noch Teilchen mitgeliefert hat, die dann von dem Filter 2.3 entfernt werden.

Über die Leitung 1.4 gelangt die so getrocknete, entölte und gesäuberte Druckluft l.l über das geöffnete Dreiwegeventil 6 in eine Heizung 2.4, wo über eine Leitung 1.6 die so vorgeheizte Druckluft l.l über eine Austrittsöffnung 1.7 in den Bodenbereich des Granulattrichters 3.1 geführt wird. Der Granulattrockner 20 besteht im wesentlichen aus einem wärmeisolierten Gehäuse, in dem die zu trocknenden Stoffe 21 angeordnet sind. Die in Pfeilrichtung 22 aus der Austrittsöffnung 1.7 austretende Luft durchströmt die zu trockpenden Stoffe 21 und verläßt über eine obere Eintrittsöffnung 1.8 den Granulattrockner 20.

In nicht näher dargestellter Weise wird im übrigen in Pfeilrichtung 11 das zu trocknende Granulat aus dem Vorratsbehälter entnommen und über die Leitung 13 einem Fördergerät 12 zugeführt, welches das zu trocknende Granulat in den Granulattrockner 20 einspeist.

Nachdem die Trocknung im Granulattrockner 20 eine zeitlang betrieben wurde, kann aus dem Granulattrockner trockenes Material entnommen werden und dem Hohlblasprozeß zugeführt werden. Die hierfür erforderlichen Förderleitungen und sonstigen Einrichtungen sind nicht dargestellt. Der Hohlblasprozeß wird dann mit diesem Material gestartet. Es wird das Ventil 6 umgestellt, so daß der Druckluftstrom l.l über die Leitung 23 dem Blasdorn 17 zugeführt wird und als Spülluft 18 in die Hohlblasform 16 eingeleitet wird. Nach dem Verlassen der Hohlblasform 16 über den Blasdorn 17 wird die so gewonnene Spülluft 18 nicht ins Freie entlassen (das Ventil 7 ist geschlossen), sondern diese Spülluft wird über das teilweise geöffnete Drosselventil 8 in die Leitung 1.5 gespeist und bei geöffnetem Ventil 9 der Heizung 2.4 zugeführt.

In gleicher Weise wie vorhin beschrieben kann diese Luft noch von der Heizung 2.4 aufgeheizt werden und wird dann in der vorher beschriebenen Weise in den Bodenbereich des Granulattrockners 20 über die Austrittsöffnung 1.7 eingeblasen. Die Einblasung erfolgt hierbei unter einem Druck, der geringfügig über dem Atmosphärendruck liegt.

In einer Weiterbildung der vorliegenden Erfindung ist noch eine zusätzliche Heizung des Granulattrockners vorgesehen, um zu gewährleisten, daß am Auslauf 24 des Granulattrockners das Granulat in einer bestimmten Ternperatur von z. B. 170° C entnommen werden kann. Hierzu ist ein eigener Heizkreislauf vorgesehen, der im wesentlichen aus einer Leitung 1.9 besteht, die an der Oberseite des Granulattrockners 20 ansetzt und die stromaufwärts eines Gebläses 3.2 in das Gehäuse mündet. Das Gebläse verdichtet die aus dem Trockner entnomrnene Luft und führt diese über die Leitung 14 einer Heizung 3.3 zu, wo diese Luft entsprechend der geforderten Granulattemperatur aufgeheizt wird und dann über eine Austrittsdüse 1.10 in das Granulat einströmt und sich mit der Spülluft 18 aus der Austrittsöffnung 1.7 vermischt.

In einem ständigen Heizkreislauf wird diese Luft wiederum über die Leitung 15 und das Gebläse 3.2 entnommen und über die Leitung 14 und die Austrittsdüse 1.10 in den Trockner zurückgebracht.

Merkmal der vorliegenden Erfindung ist also, daß die Spülluft 18 aus dem Hohlblasprozeß zur Einleitunq in den Granulattrockner 20 verwendet wird.

### ZEICHNUNGS-LEGENDE

- l.l: Druckluft
- 1.2: Leitung
- 1.3: Leitung
- 1.4: Leitung
- l.5: Leitung
- 1.6: Leitung
- 1.7: Austrittsöffnung
- 1.8: Austrittsöffnung
- l.9: Leitung
- l.l0: Austrittsdüse
- 2.1: Vorfilter
- 2.2: Trockner
- 23.: Filter
- 2.4: Heizung
- 3.1: Granulattrichter
- 3.2: Gebläse
- 3.3: Heizung
- 4: Ventil
- 5: Ventil
- 6: Ventil
- 7: Ventil
- 8: Ventil
- 9: Ventil
- 11: Pfeilrichtung
- l2: Fördergut
- 13: Leitung
- 14: Leitung
- 15: Leitung
- 16: Hohlblasform
- 17: Blasdorn
- 18: Spülluft
- 19: Pfeilrichtung
- 20: Granulattrockner
- 21: Stoffe
- 22: Pfeilrichtung
- 23: Leitung
- 24: Auslauf

## Patentansprüche

1. Verfahren zum Betieb eines Trockners (20) für pulver-, granulatförmige und schüttfähige Stoffe , wobei in den Bodenbereich eines trichterförmigen Trockners (20) ein Trockenluftstrom eingeleitet wird, der durch den zu trocknenden Stoff nach oben steigt und diesen entfeuchtet, **dadurch gekennzeichnet**, daß der Trockenluftstrom am Ausgang eines Hohlblasverfahrens, Streckblas- oder eines anderen Kunststoff-Umformverfahrens gewonnen wird, wobei die Spühlluft des Hohlblasverfahrens ausgehend vom Blasdorn (17) einer Heizung (2.4) und nachfolgend dem Trockner (20) zugeführt wird.

2. Verfahren nach Anspruch 1, **dadurch gekennzeichnet**, daß die Spülluft (18) des Hohlblasverfahrens als Trockenluftstrom verwendet wird.

3. Verfahren nach Anspruch 1 oder 2, **dadurch gekennzeichnet**, daß die Spülluft (18) des Hohlblasverfahrens nach dem Austritt aus dem Hohlblasprozeß vorgeheizt wird.

4. Verfahren nach einem der Ansprüche 1 bis 3, **dadurch gekennzeichnet**, daß die Trocknungsluft im Durchlaufverfahren den Trockner (20) durchsetzt.

5. Verfahren nach einem der Ansprüche 1 bis 4, **dadurch gekennzeichnet**, daß die Trocknungsluft nach dem Durchlauf des Trockners (20) mindestens teilweise zurückgeführt wird.

6. Verfahren nach einem der Ansprüche 1 bis 5, **dadurch gekennzeichnet**, daß in einem ersten Verfahrensschritt man vor Beginn des Hohlblasprozesses zunächst den Stoff im Trockner (20) trocknet und dann in einem zweiten Verfahrensschritt den getrockneten Stoff dem Hohlblasprozeß zuführt, in einem dritten Verfahrensschritt den Stoff im Hohlblasverfahren verformt und in einem vierten Verfahrensschritt die im Hohlblasverfahren anfallende Spülluft in den Trockner (20) zurückführt, um weiteren Stoff zu trocknen.

7. Vorrichtung zum Trocknen von pulver- ,granulatförmigen und schüttfähigen Stoffen, welche einen trichterförmigen Trockner (20) umfasst, in welchem die zu trocknenden Stoffe angeordnet sind und von einem Trocknungsluftstrom durchsetzt werden, wobei die getrockneten Stoffe nachfolgend einem Hohlblasverfahren zugeführt werden, **dadurch gekennzeichnet**, daß vom Blasdorn (17) ausgehend eine Leitung (1.5) mit der Spülluft des Hohlblasverfahrens zu einer Heizung (2.4) geführt ist, deren ausgangsseitige Leitung (1.6) in den Trockner (20) geführt ist.

8. Vorrichtung nach Anspruch 7, **dadurch gekennzeichnet**, daß die Einblasung des Trockenluftstromes über eine im Bodenbereich des Trockners (20) angeordnete Austrittsöffnung (1.7) unter einem Druck geringfügig über dem Atmosphärendruck erfolgt.

9. Vorrichtung nach einem der Ansprüche 7 oder 8, **dadurch gekennzeichnet**, daß dem Trockentrichter (3.1) ein Heizkreislauf zugeordnet ist, der aus einer Leitung (1.9) besteht, die an der Oberseite des Granulattrockners (20) ansetzt und die stromabwärts eines Gebläses (3.2) in das Gehäuse des Trockentrichters (3.1) mündet.

10. Vorrichtung nach Anspruch 9, **dadurch gekennzeichnet**, daß die in den Trockentrichter (3.1) über eine Leitung (14) eingeführte Heizungsluft eine elektrische Heizung (3.3) durchsetzt und über eine Austrittsdüse (1.10) im Bodenbereich des Trockners austritt

## Claims

1. Method of operating a dryer (20) for powdered, granulated and pourable materials, there being led into the base region of a hopper-shaped dryer (20) a dry air stream which rises upwards through the material to be dried and removes moisture from same, **characterised in that** the dry air stream is obtained at the exit of hollow blow-moulding process, a stretch blow-moulding process or some other plastics moulding process, the scavenging air of the hollow blow-moulding process proceeding from the blow tube (17) being led to a heating device (2.4) and subsequently to the dryer (20).

2. Method according to claim 1, **characterised in that** the scavenging air (18) of the hollow blow-moulding process is used as a dry air stream.

3. Method according to claim 1 or 2, **characterised in that** the scavenging air (18) of the hollow blow-moulding process is pre-heated once it has left the hollow blow-moulding process.

4. Method according to one of claims 1 to 3, **characterised in that** the drying air infiltrates the dryer (20) in a continuous operation.

5. Method according to one of claims 1 to 4, **characterised in that** the drying air, once it has passed through the dryer (20) is led back, at least partially.

6. Method according to one of claims 1 to 5, **characterised in that** in a first method step, before the hollow blow-moulding process begins, the material is first dried in the dryer (20) and then in a second method step the dried material is led into the hollow blow-moulding process, in a third method step the material is shaped in the hollow blow-moulding process and in a fourth method step, the scavenging air arising during the hollow blow-moulding process is led back into the dryer (20) in order to dry additional material.

7. Device for drying powdered, granulated and pourable materials, which includes a hopper-shaped dryer (20) in which the materials to be dried are disposed and have a drying air stream passed through them, the dried materials subsequently being led into a hollow blow-moulding process, **characterised in that**, starting from the blow tube (17), a pipeline (1.5) with the scavenging air from the hollow blow-moulding process is led to a heating device (2.4) whose exit pipeline (1.6) is led into the dryer (20).

8. Device according to claim 7, **characterised in that** the dry air stream is blown in via an outlet aperture disposed in the base region of the dryer (20) and under a pressure which is slightly above atmospheric pressure.

9. Device according to one of claims 7 or 8, **characterised in that** there is associated with the drying hopper (3.1) a heating circuit, which consists of a pipeline (1.9) which starts on the upper side of the dryer (20) for the granulated material and opens out into the housing of the drying hopper (3.1) upstream of a blower (3.2).

10. Device according to claim 9, **characterised in that** the heating air led into the drying hopper (3.1) via a pipeline (14) permeates an electrical device (3.3) and escapes via an escape nozzle (1.10) in the base region of the dryer.

## Revendications

1. Procédé pour le fonctionnement d'un sécheur (20) pour des produits pulvérulents, en forme de granulés et en vrac, selon lequel un courant d'air de séchage est introduit dans la zone du fond d'un sécheur en forme de trémie (20), lequel courant d'air de séchage monte en traversant le produit à sécher et déshydrate celui-ci, **caractérisé** en ce que le courant d'air de séchage est récupéré à la sortie d'un procédé de soufflage creux, d'un procédé de soufflage avec étirage ou d'un autre procédé de déformation de matière plastique, l'air de rinçage du procédé de soufflage creux étant amené, à partir du mandrin de soufflage (17) d'un chauffage (2.4), dans le sécheur (20).

2. Procédé selon la revendication 1, **caractérisé** en ce que l'air de rinçage (18) du procédé de soufflage creux est utilisé comme courant d'air de séchage.

3. Procédé selon la revendication 1 ou 2, **caractérisé** en ce que l'air de rinçage (18) du procédé de soufflage creux est préchauffé après sa sortie dudit procédé de soufflage creux.

4. Procédé selon l'une des revendications 1 à 3, **caractérisé** en ce que l'air de séchage traverse le sécheur (20) en continu.

5. Procédé selon l'une des revendications 1 à 4, **caractérisé** en ce que l'air de séchage est au moins partiellement remis en circulation après avoir traversé le sécheur (20).

6. Procédé selon l'une des revendications 1 à 5, **caractérisé** en ce que lors d'une première phase, on commence par sécher le produit dans le sécheur (20) avant le début de l'opération de soufflage creux, puis lors d'une deuxième phase, on amène le produit séché vers le soufflage creux, on le déforme par soufflage creux lors d'une troisième phase, et lors d'une quatrième phase, on ramène dans le sécheur (20) l'air de rinçage produit lors du soufflage creux, afin de sécher d'autre produit.

7. Dispositif pour sécher des produits pulvérulents, en forme de granulés et en vrac, qui comprend un sécheur en forme de trémie (20) dans lequel les produits à sécher sont disposés et sont traversés par un courant d'air de séchage, les produits séchés étant ensuite amenés vers un procédé de soufflage creux, **caractérisé** en ce qu'une conduite (1.5) contenant l'air de rinçage du procédé de soufflage creux part du mandrin de soufflage (17) et mène à un chauffage (2.4) dont la conduite située côté sortie (1.6) mène au sécheur (20).

8. Dispositif selon la revendication 7, **caractérisé** en ce que l'introduction du courant d'air de séchage par une ouverture de sortie (1.7) disposée dans la zone du fond du sécheur (20) se fait à une pression légèrement supérieure à la pression atmosphérique.

9. Dispositif selon la revendication 7 ou 8, **caractérisé** en ce qu'il est prévu, associée à la trémie de séchage (3.1), un circuit de chauffage formé d'une conduite (1.9) qui part du côté supérieur du sécheur de produits en forme de granulés (20) et qui débouche, côté aval d'une soufflante (3.2), dans le carter de la trémie de séchage (3.1).

10. Dispositif selon la revendication 9, **caractérisé** en ce que l'air de chauffage introduit dans la trémie de séchage (3.1) par une conduite (14) traverse un chauffage électrique (3.3) et sort par une buse de sortie (1.10) prévue dans la zone du fond du sécheur.
